# EUROPEAN PATENT APPLICATION

(11) **EP 0 617 498 A1**
(43) Date of publication of application: **28.09.1994**
(21) Application number: 94200735.2
(22) Date of filing: 23.03.1994
(51) Int. Cl.: H02H 7/22, H02H 5/04

(54) **Safety system for protecting cables and devices from fire producing faults through the use of a guard lead causing the tripping of highly sensitive differential circuit breakers**

(30) Priority: 26.03.1993 IT PD930072
(71) Applicant: Possamai, Clemente, I-31030 Cison di Valmarino (Treviso) (IT)
(72) Inventor: Possamai, Clemente, I-31030 Cison di Valmarino (Treviso) (IT)
(74) Representative: Dragotti, Gianfranco

(57) **Abstract**

To reduce fire hazards which can occur when, owing to wear, at least one of the leads (42, 44) of a supply cable losts continuity, allowing just a problematic current conduction, causing repeated electric arcs (60) tending to set on fire electrically insulating but flammable materials, is provided a guard lead (66), surrounding the leads (42, 44) and connectable to a ground tap (32) compulsory for every electric system causing the intervention of a differential circuit breaker (14) of highly sensitive kind for protection from electric shocks.

Specifically, the guard lead (66) is wound around the conductor pair forming the supply cable and is in the form of a flat ribbon or a wire gauze (preferably a copper gauze) to lower the temperature of insulating parts starting a fire and contain this fire in the immediate neighbourhood of the fault having caused that. Further, the guard lead (66) is ground connected through current limiting means (70) to limit the ground fault currents to a magnitude sufficient to cause tripping of the differential circuit breaker but not cause fire beginnings.

## Description

The present invention regards a safety protecting system to reduce fire risks connected to electric faults of supply cables as well as inside electric devices where a wide use of electrically insulating but easily flammable materials is expected.

Presently there is the tendency to install in electric systems, for both civil. industrial and trading or administrating buildings the so-called highly sensitive differential circuit breakers (commonly known as "life saving" circuit breaker) to provide protection against electric shocks caused by accidental contacts of body parts of a user between one of the electric leads and ground.

These highly sensitive differential circuit breakers exist already for long time, so that there are in trade many kinds of them fully accomplishing their task and the European Regulations on the safety of the electric systems made compulsory their use, even with different features, according to their installation either in civil buildings or in other buildings.

However, while their protective features against ground faults and thus against shock hazards, are excellent owing to the very small currents sufficient to cause their tripping, they do not seem to have so good protective features against faults due to wire intermittent interruption and to short circuit between them for which must be necessarily provided a poorly sensitive tripping, because must be allowed a current flow high enough to meet the requirement of at least a household user (about 14 Amp. for a usual household user of about 3kw). The reason for that is selfevident to anyone skilled in this art and resides in the structure of the above mentioned circuit breaker, as herebelow briefly specified.

The typical safety tripping circuit breaker belonging to the kind of the so-called "life saving" circuit breakers consists of a common magnetothermal tripping circuit breaker provided on its load side with a differential transformer comprising two primary windings substantially formed by two short wire pieces of so high cross-section to bear the current to be provided to the user (for example the above mentioned 14 Amp.) and a secondary winding formed by many turns of thin wire at which can be formed sufficient voltage to drive a shunt trip unit connected to the engaging mechanism of main contacts of the circuit breaker itself.

Owing to the specific features of the differential transformers, when in the two primary windings flow equal currents, as the magnetic effects of these two currents are equal in magnitude but reversed in direction, at the secondary winding does not appear any voltage and thus does not exist any chance to drive the shunt trip unit causing main contact opening. If, owing to some reason, such as the current flow due to a ground fault, the currents through the two primary windings were different, then across the secondary winding could be yelded such a voltage to drive the above mentioned shunt trip unit. The practical experience and the compliance with the prescribed safety rules indicate that the differential transformer have to drive the shunt trip unit when the difference between the currents through the load conductors (the primary windings of the transformer) is comprised between 15 and 30 mA. This magnitude of the current difference has been chosen because a tripping caused by a smaller difference (even if it is technically possible to drive a trip unit also with current differences of just one hundredth of the chosen magnitude) can be troublesome because could yeld unwanted and unnecessary opening of the circuit breaker even in cases of unexisting or unimportant and thus undectable hazard, while a current difference higher than the above indicated amount, could cause a serious shock hazard. Actually the currents of the magnitude order of those chosen to cause tripping of the circuit breaker do not result substantially hazardous just thank to the high actuation speed of the used trip units permitting the opening of the circuit breaker well before a current of that magnitude, flowing through a human body, could be of serious hazard. It remains the strongly detected sensation of shock hazard without having actually the physiologic effects of a true electric shock.

The features of the above mentioned "life saving" circuit breakers are particularly useful in case of the so-called "ground faults" when a voltage bearing, live or hot portion of an electric device gets in touch with parts thereof more or less efficientley connected to ground, because through this contact comes back to the electric network some current not flowing through one of the primary windings of the differential transformer and thus, being substantial the current difference between the two primary windings, there is an actuation of the shunt trip unit within a short time of the order of a few millisecond. In such a case the circuit breaker opens well before the earth fault causes substantial damages to the protected device.

In a similar way behaves the "life saving" circuit breaker in case o current flow through the body of a human being or an animal owing the accidental touch of live parts of the device with said body. Also in such a case the current flow through the body, and then to the ground, yelds a difference in the currents flowing in the two primary windings of the diffential transformer and thus the actuation of the shunt trip unit is caused well before that said current flow lasts so long to have a serious shock effect.

A particular case, in which the "life saving" circuit breaker is substantially useless, occurs when the metallic members of a lead are weared, which for flexible cables consist of braids of copper strands, owing for example to a too high number of particularly small radius bends, so that it happens a breaking of the wire with stumps thereof held adjacent in position by the insulating material surrounding the lead itself. It begins to occur a precarious electric conduction intercalated by accidental interruptions often associated to short electric arcs occasionally formed between the two stumps remaining still strictly each other faced, the magnitude and the possibility of the spark starting chiefly depending from the nature of the electric load. In the long run it may happen that the insulating material, owing to a long exposure to electric arcs, is carbonized and the carbonized area catchs fire, producing embers which can propagate to insulating but combustible materials arranged around the lead, as for example cotton fibers. From that it is possible to have a fire beginning leading to the destruction of the whole insulating material surrounding the adjacent lead of the cable till the occurrence of a firm short circuit between the two leads, against which can operate the electromechanic trip unit of the circuit breaker causing the opening thereof. However, it is known that a substantially instantaneous electromagnetic trip unit (forming a part of the above mentioned electromechanic unit) of a circuit breaker is driven by current amounts at least ten times higher than the rated current and, thus, in the case of circuit breakers expected to carry rated currents of 14 Amp. the actuation of the electromagnetic trip unit could occur just when the short circuit current amounts to a magnitude of about 140 Amp., a so large amount causing such a strong heating to confirm a fire beginninging into a strong fire well more difficult to be extinguished.

Presently there are some electric household devices, such as heat pads, electric blankets and the like, which are particularly prone to this kind of accidents ending with a fire, which the "life saving" circuit breaker cannot avoid. Unfortunately this kind of devices are often used by elder people needing heat for reasons of health, but poorly skilled and conscious of the hazards connected with wears of leads ending with fire beginnings, having very often tendency to doze off under the effect of heating, and not attentive to possible hazards. News of deaths of elder people connected to accidental fires of heat pads and electric blankets peridocally appears on the newspapers.

Now it is an object of the present invention to compell, by means of simple provisions, a "life saving" circuit breaker to operate through the shunt trip unit driven by the differential transformer just when begins to occur a wear condition of a lead which can end in a fire.

This object can be obtained by adding to the leads of the cable a further guard lead which at the beginning of the thermal alteration of an insulator of one of the leads diverts a portion of the current to ground, causing the imediate intervention of the differential transformer and of the shunt trip unit by it actuated which causes the opening of the contacts of the "life saving" circuit breaker, said guard lead arranged around the main leads of the cable or the apparatus providing also to operate as temporary heat sink tending to lower the temperature of portions of the cable or electric apparatus prone to fire beginning, disconnecting istantaneously electric power which could extend the fire azard and reach the condition of firm short circuit between the leads of the cable or the apparatus, lowering very much the hazard of fire through heat removal from combustible or however tarred portions.

The best operation of the invention occurs when between the guard lead and ground are interposed current limiting means allowing the flow of sufficient current to trip the shunt tripping unit but not sufficient to substantially raise the temperature of the portion prone to fault, as the current of an electric spark from a lead of the cable or electric apparatus to ground can be contained into amounts of the same order of the tripping currents of the "life saving" circuit breaker.

Particularly, said current limiting means consist of a resistor.

More particularly, for cables usable with conventional network votages from 110 to 220 Volts the resistance of the above mentioned resistor is comprised between 100 and 10000 ohms.

Preferably, said resistance amounts to 1000 ohms.

Alternatively, said current limiting means can be incorporated into the guard lead consisting of a semiconductor layer arranged around said two leads and connected to ground.

In a preferred embodiment, the guard lead of the present invention consists of a thin metallic strip elicoidally wound around the lead pair and obviosly connected to ground through some current limiting means.

Alternatively, the guard lead of the present invention conists of a metallized paper strip elicoidally wound around the leads with the metallic portion facing the leads.

Also alternatively, the strip can be a metalized plastic film.

According to another embodiment, the guard lead consists of at least one wire gauze sleeve embracing the two leads of the cable and ground connected through the current limiting means.

Alternatively, the guard lead consits of two wire gauze sleeves, anyone embracing one of the leads of the cable, each other connected and then connected to ground through the current limiting means.

For having a better usable and safer article, the guard lead, embodied according to one of the above depicted solutions, must be outside coated by a flexible insulating sheath.

Particularly, said insulating flexible sheath consists of a sleeve of flexible plastic material.

Alternatively, said insulating flexible sheath consits of a fabric sleeve.

According to a futher embodiment, together with the supply cable, can be protected those kinds of apparatus permitting that, such as heat pads, electric blankets and the like, arranging a guard lead as a metal fabric or gauze all around the the apparatus and connecting this lead to the guard lead of the supply cable, which, of course, is connected to ground through said current limitig means.

Always in order to have better usable and safer apparatus, the external wire gauze can be further coated by a soft and flexible covering.

Particularly, said soft and flexible covering consists of fabric.

Alternatively, the guard lead can consit of fabric containing semiconductor fibers also operating as current limiting means.

Also alternatively, instead of a fabric containing semiconductor fibers can be used a plastic film, possibly provided with small holes, filled with semiconductor materials, such as grounded coal or graphite or carbon black.

The features and the advantages of the present invention will be particularly pointed in the claims forming the conclusive portion of this description, however further features and advantages will appear from the following detailed description of of embodiments thereof, intended as nonlimiting, provided with the enclosed drawings, in which:
- Figure 1 is an electric diagram depicting the connection of an apparatus provided with a ground lead and protected by a differential circuit breaker;
- Figure 2 is an electric diagram depicting the connection of an apparatus not provided with ground lead for which a protection against accidental shocks to users is provided by the presence in an electric system of a higly sensitive differential circuit breaker of the so-called "life saving" kind;
- Figure 3 is a principle electric diagram of an electric apparatus, without ground lead, connected through a simple two lead cable in which an interruption fault of one of the leads is starting;
- Figure 4 is a principle electric diagram of the same apparatus, connected as depicted in figure 3, in which it is understood how a fault started as a simple interruption of a lead can degenerate in a firm short circuit able to cause a fire;
- Figure 5 is a principle electric diagram of a supply cable provided with the particular guard lead, according to the present invention, depicting how a fault start through lead interruption, such as that depicted in figure 3, can lead to the trip of the highly sensitive differential circuit breaker or "life saving" circuit breaker for avoiding fire beginnings connected to firm short circuits between supply leads;
- Figure 6 is a principle electric diagram of an apparatus, provided with the guard lead according to the present invention, connected to the same kind of guard lead of the supply cable depicted in figure 5 to give the same kind of fire protection to particular electric apparatus needing it;
- Figure 7 is a depiction, with broken portions for depicting purposes, of a supply cable provided with a guard lead as a metal strip elicoidally wound around a pair of supply leads;
- Figure 8 is a depiction, with broken portions for depicting purposes, of a supply cable provided with a guard lead as a wire gauze sleeve enclosing the pair of supply leads;
- Figure 9 is a depiction, with broken portions for depicting purposes, of a supply cable provided with a guard lead as a pair of wire gauze sleeves, anyone enclosing one of the supply leads forming the pair; and
- Figure 10 is a depiction, with broken portions for depicting purposes, of an electric apparatus, specifically a heat pad, an electric blanket, or similar heating apparatus outside coated by a fabric, provided with an electrically conductive covering as a wire gauze to be connected to a guard lead of a supply cable protected according to the principles of the present invention.

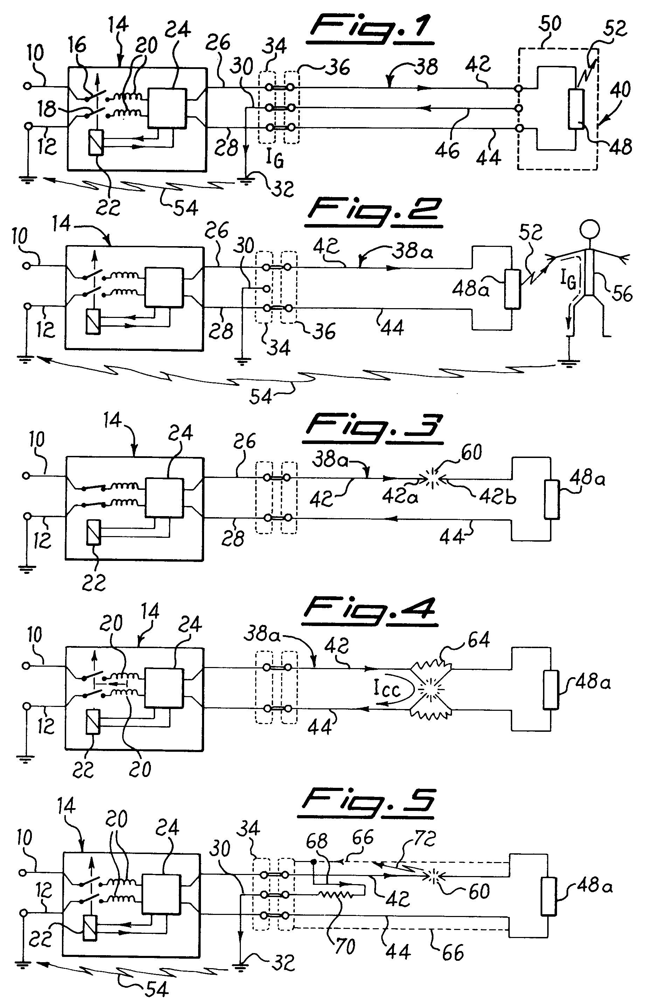

Looking first to figures 1 and 2 in which is rather schematically depicted the principle of the electric system for civil home provided with highly sensitive differential circuit breaker (commonly known as "life saving" circuit breaker) and ground tap according to the safety regulations.

As it is seen in said figures, from the network of the facility come two leads of which a first one 10, said phase lead is at a different voltage with respect to ground, while a second lead 12, called neutral lead, is substantially at ground voltage because is connected to ground at least at the transformer place. The two leads 10 and 12 come into a highly sensitive differential transformer 14, of the kind suitable to prevent electric shocks, consiting essentially of a pair of interrupting contacts 16 and 18 actuated both manually for making and interrupting circuits, and automatically open switcheable by means of tripping units such as a magnetothermal or electromechanical trip unit 20 for protection against overcurrents and short circuit currents, and a shunt trip unit 22 which is actuated by a differential transformer 24 which can actuate said shunt trip unit 22 when between the two load conductors passing therethrough and forming the primary windings of the transformer itself does extist a current difference comprised between 15 and 30 mA, as required for the shock protecting circuit breakers manufactured according to the present safety regulations.

From the differential circuit breaker 14 come out two leads 26 and 28, which are arranged with a lead 30 connected to a ground tap 32 and are connected to sockets, such as the here depicted socket 34, in which can be inserted plugs 36 connected to supply cables 38 for an electric apparatus 40.

As depicted in figure 1, the supply cable 38 comprises two supply leads 42 and 44, respectively connected to the phase and the neutral leads of the system, and a central ground lead 46 connected to the ground lead 30 of the home system. The electric apparatus 40 essentially consits of an active portion 48, actuated by the electric power, and a housing 50 enclosing the electric portion and connected, if it is metallic, to the central ground lead 46 of the supply cable 38.

It is easily seen that when, owing a fault, a contact between the active portion 48 and the housing 50 occurs, here depicted by the symbol 52 reminding a lightning, should flow a fault current I_{G} through the central ground lead 46, the ground tap 32 and to the ground tap in the transformer place along a current path 54 clearing one of the primary windings of the differential transformer 24 which, as a consequence, delivers across the secondary winding a voltage high enough to actuate the shunt trip unit 22, disconnecting the electric power from the system to which is connected the damaged apparatus.

A similar tripping occurs also for those electric apparatus which, being externally formed by completely insulating portions, are connected to a supply cable 38a not having the central ground lead, as depicted in figure 2, but just provided with the phase lead 42 and the neutral lead 44. In such a case an accidental contact 52 of a human or animal body 56 with an active, live portion 48a of the electric apparatus causes the flow of a fault current I_{G} trhough said body 56 and return path 54 to the ground tap at the transformer place which, still clearing one of the one of the primary windings of the differential transformer 24, causes the tripping of the shunt trip unit 22, so disconnecting electric power from the protected system and stopping any shock hazard.

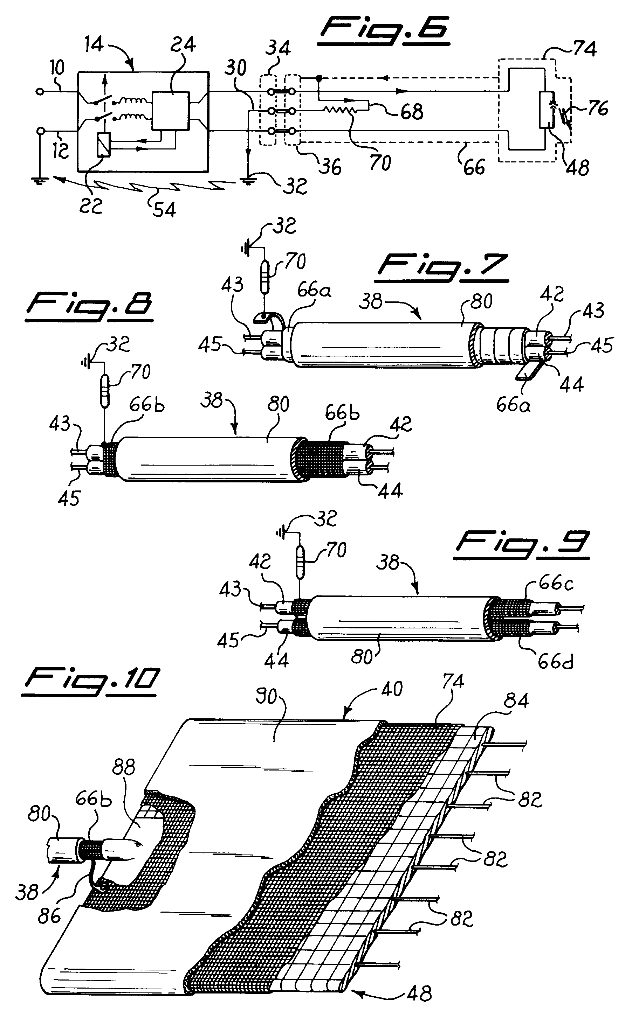

Let us consider the figures 3 and 4 to well understand the problem of lack of protection from fire hazards which can occur with apparatus not protected by ground lead.

Particularly looking at the figure 3, it is seen that, when owing to wear, due for example to frequent too tight bends, occurs an interruption on one of the leads of the supply cable 38a, such as the lead 42, with stumps so tightly close that a series of occasional arcs 60 could occur therebetween, it may happen in the time that, owing to the high temperatures of the arcs, begins firstly to be affected the insulating covering of the lead prone to them, forming carbonaceous portions which can catch fire, forming embers which further raise the local temperature, supporting the formation of a fire beginning. As this particular situation does not produce any difference in the currents flowing through the primary windings of the differential transformer 24, it is impossible any action of the circuit breaker connected to the kind of fault which is occurring, as depicts figure 3 just indicating lack of action of the circuit breaker. The above mentioned fire beginning can also develop affecting the integrity of the insulating covering of the adjacent lead 44, stripping and putting it in touch with the hot stump 42a of the lead 42, leading to a firm short circuit between the leads 42 and 44 with a strong short circuit current I_{CC} flow, and considerable heating and the delivery of burning vapors and gases depicted in figure 4 by the symbol 64, meaning the occurrence of a short circuit with explosive effects and the trowing of burning portions able to increase an already occurred fire. At this time the thermo-magneitc trip units 20 of the circuit breaker 14 operate, assuring the break of the circuit, but the heat delivery has been so high that very hardly could burn out a fire caused by such a so serious short circuit. This is right the case in which in the common two lead cables 38a cannot be avoided a fire started with an accidental interruption of one of the leads.

To obviate such a situation has been devised the present invention consisting in arranging around the two supply leads 42 and 44 of the two lead cable a guard lead 66 wound in tight touch with the insulating covering of the leads 42 and 44 themselves and connceted through a resistor 70, to the central or ground member of a plug 36 insertable in a socket 34 of a home electric system where, by means of a lead 30, is connected to the ground tap 32 of the home electric system itself.

The operation of this embodiment of the invention is selfexplaining. When owing the occurrence of accidental arcs 60 in an interrupted lead 42, there is affection of the insulating covering, is formed a conductive bridge 72 with the guard lead 66, tightly therearound. This conductive bridge 72 makes a current to flow through the guard lead 66, the further lead 68, the limiting resistor 70 and at last the ground tap 32, causing a current flow 54 through the ground to the ground tap at the transformer place and giving to the differential circuit breaker 14 the tipical situation compelling the transformer 24 to power the shunt trip unit 22 and thus to open the contacts 16 and 18 of the circuit breaker. The consequent operation of the differential circuit breaker disconnects electric power from the supply cable, stopping any affection thereof well before of the occurrence of a firm short circuit which is the main responsible of a serious fire. Also it is to appreciate that it is possible to choose for the resistor 70 such a resistance to allow a safe operation of the shunt trip unit 22 without causing substantial temperature rise in the conductive bridge 72. At last, the metal mass of the guard lead 66 around the supply leads 42 and 44 operates as a temporary heat sink to maintain the temperature of the insulating covering within limits not allowing the prosecution of any thermal affection of the insulating covering itself.

As depicted in figure 6, this kind of protection from fire beginnings can be extended also to apparatus not provided with metal houses and specifically to heat pads, electric blankets and the like, by coating them with a guard conductor 74 the active region 48 of the electric apparatus itself, being said guard conductor 74 connected to the guard lead 66 in the supply cable (or through current limiting means to a central ground lead), which obviously is connected to the ground tap 32 through the same members and the same methods depicted in figure 5 and obtains the same results of operation of the differential circuit breaker 14, as well as the same results in stopping fire beginnings. Of course, also in such a case the metall mass of the conductor 74 around the active region 48 of the electric apparatus operates as a temporary heat sink maintaining the temperature of insulating coverings within such limits not to allow prosecutions of thermal affection thereof.

The subsequent figures 7 to 10 depict how can be implemented supply cables and electric apparatus provided with the protection system according to the present invention.

Looking at figure 7, it is seen that a cable 38 according to the present invention provides, as wound around the two supply leads 42 and 44, repectively provided with conductive cores 43 and 45, a guard lead in the form of a metal strip 66a adhering to the insulating covering of the two leads and is connected, through a resistor 70, to a ground tap 32. The metal strip 66a can be formed by just metal or by metallized paper or plastic film, the paper or the plastic film operating as a mechanical support for the metallization, the only necessary condition being that the metallization is in touch with the insulating covering of the leads 42 and 44 and is also connected to the resistor 70 and however to the ground tap 32.

To maintain the strip 66a adhering about the leads 42 and 44 and to prevent any damaging thereof, is used a flexible plastic or fabric sheath 80.

Figure 8 shows a cable 38, according to the present invention, providing to tightly wind both the leads 42 and 44 with just one sleeve 66b of wire gauze which in turn is connected to the ground tap 32 through the usual current limiting resistor 70. Also in this case a flexible plastic or fabric sheath 80 can maintain the sleeve 66b adhering against the leads 42 and 44 and prevent any damage thereto.

At last, figure 9 shows a cable 38 in which anyone of the leads 42 and 44 is covered by a respective sleeve 66c and 66d, this emdodiment differing from that of figure 8 just for the need of connecting together the two sleeves 66c and 66d to the limiting resistor 70 and the ground tap 32.

Figure 10 shows how an electric apparatus 40 can contain the protection system according to the present invention. In such a particular case, the electric apparatus is a heat pad.

The active portion 48 of the heat pad consists of a plurality of resistive conductors 82 embedded in an electrically insulating material 84, convenientely in woven or however fibrous form externally tightly surrounded by a metal wire gauze 74 forming the guard conductor to be connected, for example by means of a braid lead 86 to the guard wire guaze lead 66b of the supply cable 38 which is fastened by means of a proper fastening member 88 to the body of the apparatus 40. The wire gauze 74 is covered by a sheath 90, usually of electrically insulating fabric and quite soft to prevent direct touch of the wire gauze with the users of the electric apparatus.

What has been here above disclosed depicts some embodiments of the present invention which, of course, cannot limit the scope thereof, so that any person skilled in this art can devise from the reading of the above description obvious changes and variations to be considered as here covered.

For example, instead of the guard lead 66 can be used the electrically semiconductive materials here above mentioned. In such a case would be partially lost the function of temporary heat sink provided by a metal conductor 66 but, as the operating time of the differential circuit breaker 14 is extremely short, this function could be not strictly necessary.

## Claims

1. Safety system for protecting electric cables and apparatus from fire producing faults characterized by adding to the leads (42, 44, 82) of the cable (38) or the apparatus (40) a further guard lead (66) which at the beginning of the thermal alteration of an insulator of one of the leads (42, 44, 82) diverts a portion of the current to ground, causing the imediate operation of a differential transformer (24) and of a shunt trip unit (22) by it actuated which causes the opening of the contacts of a differential circuit breaker (14), said guard lead (66) arranged around the main leads (42, 44, 82) of the cable (38) or the apparatus (40) providing also to operate as temporary heat sink tending to lower the temperature of portions of the cable (38) or electric apparatus (40) prone to fire beginning, disconnecting istantaneously electric power which could extend the fire azard and reach the condition of firm short circuit between the leads (42, 44) of the cable (38) or the apparatus(40), lowering very much the hazard of fire through heat removal from combustible or however tarred portions.

2. Safety system, as in claim 1, characterized in that between the guard lead (66) and ground (32) are interposed current limiting means (70) allowing the flow of sufficient ground current to cause the operation of the shunt tripping unit (22) but not sufficient to substantially raise the temperature of the portion prone to fault, as the current of an electric spark from a lead of the cable (38) or electric apparatus (40) to ground can be contained into amounts of the same order of the tripping currents of the differential circuit breaker (14).

3. Safety system, as in claim 2, characterized in that said current limiting means (70) consist of a resistor.

4. Safety system, as in claim 3, characterized in that for cables usable with conventional network votages from 110 to 220 Volts the resistance of the resistor (70) is comprised between 100 and 10000 ohms.

5. Safety system, as in claim 4, characterized in that said resistance amounts to 1000 ohms.

6. Safety system, as in claim 2, characterized in that said current limiting means can be incorporated into the guard lead consisting of a semiconductor layer arranged around the conductors (42, 44, 82) and connected to ground (32).

7. Safety system, as in claim 2, characterized in that the guard lead (66) consists of a thin metallic strip (66a) elicoidally wound around the lead pair (42, 44) and obviosly connected to ground (32) through some current limiting means (70).

8. Safety system, as in claim 2, characterized in that the guard lead (66) consists of a metallized paper strip elicoidally wound around the leads (42, 44) with the metallic portion facing the leads (42, 44).

9. Safety system, as in claim 8, characterized in that the strip can be a metalized plastic film.

10. Safety system, as in claim 2, characterized in that the guard lead (66) consists of at least one wire gauze sleeve (66b) embracing the two leads (42, 44) of the cable (38) and ground connected through the current limiting means (70).

11. Safety system, as in claim 2, characterized in that the guard lead (66) consits of two wire gauze sleeves (66c, 66d), anyone embracing one of the leads (42, 44) of the cable (38), connected to the other sleeve and then connected to ground (32) through the current limiting means (70).

12. Safety system, as in preceding claims, characterized in that the guard lead (66), embodied according to one of the above depicted solutions, must be outside covered by a flexible insulating sheath (80).

13. Safety system, as in claim 12, characterized in that said insulating flexible sheath (80) consists of a sleeve of flexible plastic material.

14. Safety system, as in claim 12, characterized in that said insulating flexible sheath (80) consits of a fabric sleeve.

15. Safety system, as in claim 1, characterized in that to protect with the supply cable (38) those kinds of apparatus (40) permitting that, such as heat pads, electric blankets and the like, is arranged a guard lead as a metal fabric or wire gauze (74) all around the the apparatus (40) and this lead is connected to the guard lead (66) of the supply cable (38), which, of course, is connected to ground (32) through said current limitig means (70).

16. Safety system, as in claim 15, characterized in that the external wire gauze (74) can be further coated by a soft and flexible covering (90).

17. Safety system, as in claim 15, characterized in that said soft and flexible covering (90) consists of fabric.

18. Safety system, as in claim 15, characterized in that the guard lead around the apparatus (40) consits of fabric containing semiconductive fibers also operating as current limiting means.

19. Safety system, as in claim 18, characterized in that instead of a fabric containing semiconductive fibers can be used a plastic film, possibly provided with small holes, filled with semiconductive materials, such as grounded coal or graphite or carbon black.
